(19) Europäisches Patentamt / European Patent Office / Office européen des brevets

(11) **EP 4 081 455 B1**

(12) **FASCICULE DE BREVET EUROPEEN**

(45) Date de publication et mention de la délivrance du brevet:
**22.01.2025 Bulletin 2025/04**

(21) Numéro de dépôt: **20838571.6**

(22) Date de dépôt: **24.12.2020**

(51) Classification Internationale des Brevets (IPC):
*B64D 21/00* (2006.01)   *B64D 45/00* (2006.01)
*B64U 10/14* (2023.01)   *B64U 70/83* (2023.01)
*B64D 17/70* (2006.01)   *B64F 5/60* (2017.01)
*B64D 17/72* (2006.01)   *B64D 17/80* (2006.01)
*G07C 5/00* (2006.01)   *G07C 5/08* (2006.01)

(52) Classification Coopérative des Brevets (CPC):
**B64D 45/00; B64D 17/70; B64D 17/725;
B64D 17/80; B64D 21/00; B64F 5/60; B64U 10/14;
B64U 70/83;** B64D 2045/0085; G07C 5/006;
G07C 5/0808

(86) Numéro de dépôt international:
**PCT/EP2020/087879**

(87) Numéro de publication internationale:
**WO 2021/130373 (01.07.2021 Gazette 2021/26)**

(54) **DISPOSITIF ET PROCEDE DE CONTROLE AUTOMATIQUE DE L'ETAT DE SERVICE D'UN SYSTEME DE PARACHUTE D'UN DRONE VOLANT**

VORRICHTUNG UND VERFAHREN ZUR AUTOMATISCHEN ÜBERPRÜFUNG DES SERVICEZUSTANDS EINES FALLSCHIRMSYSTEMS EINER FLUGDROHNE

DEVICE AND METHOD FOR AUTOMATICALLY CHECKING THE SERVICE STATE OF A PARACHUTE SYSTEM OF A FLYING DRONE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2019 FR 1915684**

(43) Date de publication de la demande:
**02.11.2022 Bulletin 2022/44**

(73) Titulaire: **Azur Drones**
**30700 Merignac (FR)**

(72) Inventeurs:
• **LECESTRE, Antoine**
  **33000 Bordeaux (FR)**
• **LINARD, Grégoire**
  **33200 Bordeaux (FR)**

(74) Mandataire: **Rataboul, Xavier**
  **Cabinet Benech**
  **37, avenue de Friedland**
  **75008 Paris (FR)**

(56) Documents cités:
WO-A1-2019/181989    CN-U- 208 775 024
FR-A1- 3 046 988    GB-A- 2 032 860
KR-A- 20140 141 130    US-B1- 10 399 706

**Description**

La présente invention concerne un dispositif et un procédé de contrôle automatique de l'état de service du système de parachute d'un drone volant autonome. L'invention concerne également un drone volant autonome muni du dispositif précédent.

L'invention concerne plus particulièrement le domaine de la surveillance de sites par des drones aériens autonomes (UAV pour Unmanned aerial vehicule).

Les drones aériens de masse inférieure à 25 kg peuvent constituer un risque pour les personnes et les biens survolés en cas de chute. En effet, la plupart des drones, et en particulier les drones multi rotors, ne sont pas capables de se sustenter par eux même en cas de perte de propulsion. Ainsi, en cas de défaillance majeure du drone, la chute libre est inévitable.

Or, le risque létal d'un impact pour tout individu intervient lorsque l'énergie libérée au point d'impact est supérieure à 69 Joules. Cette énergie peut être atteinte avec des drones ayant une masse supérieure ou égale à 2 kg.

Il convient donc de diminuer l'énergie à l'impact des drones afin de limiter le danger de leur utilisation pour autoriser le vol à proximité de personnes. Certains pays, comme la France, rendent obligatoire ce type de dispositif de limitation d'énergie à l'impact pour pouvoir voler dans certains scénarios, notamment avec des drones autonomes, c'est-à-dire sans pilote et effectuant automatiquement des plans de vol prédéfinis ou non.

L'énergie totale accumulée par un drone est constituée principalement de son énergie potentielle et son énergie cinétique. La première est principalement fonction de la hauteur du drone. La seconde de sa vitesse. Lors d'une chute libre, de l'énergie potentielle (altitude) est convertie en énergie cinétique (vitesse de chute). L'énergie cinétique étant proportionnelle à la masse ainsi qu'au carré de la vitesse, on comprend que pour diminuer le plus efficacement l'énergie totale du drone, il est plus efficace de diminuer la vitesse de chute. C'est pourquoi la méthode la plus communément utilisée dans le domaine des drones pour diminuer les risques liés à un impact au sol est l'emploi d'un ou plusieurs parachutes. En augmentant fortement la traînée aérodynamique du drone, ils limitent la vitesse de chute à un seuil acceptable.

Le dispositif de limitation de l'énergie à l'impact est un élément essentiel de la sécurité liée à l'usage des drones. Il doit donc être vérifié régulièrement pour garantir sa bonne capacité de fonctionnement.

Le document WO20191819989 décrit un dispositif de contrôle de fonctionnement d'un drone qui ne peut pas être temporairement inactivé pour éviter un déploiement intempestif.

Le document CN208775024 décrit un système de parachute pour drone sans décrire le circuit électronique d'actionnement.

Pour que la surveillance de site par des drones autonomes soit possible et compatible avec l'absence de main d'œuvre, il est nécessaire que chaque drone autonome puisse vérifier automatiquement le bon état de santé du dispositif de déploiement du parachute. En effet, pour les drones avec pilote, cette tâche incombe usuellement à un humain. Un drone autonome sous-entend qu'il n'y a plus personne pour effectuer cette tâche au quotidien tout en étant contraint à un niveau de fiabilité encore plus élevé. Le parachute doit en effet automatiquement pallier des cas de dysfonctionnement système où, habituellement, un pilote serait en mesure de reprendre le contrôle.

Un objectif de la présente invention est donc de proposer un dispositif et un procédé de contrôle automatique de l'état de service du système de parachute d'un drone autonome.

Un autre objectif est de proposer un dispositif et un procédé de contrôle automatique de l'état de service du système de parachute d'un drone autonome qui soit sûr, c'est-à-dire sans risque de déclenchement intempestif du système de parachute.

Ce contrôle se fait au moins avant le vol du drone autonome, mais il peut avantageusement se poursuivre pendant le vol pour certains paramètres.

À cette fin, la présente invention propose un dispositif de contrôle automatique de l'état de service d'un système de parachute pour un drone volant conforme à la revendication 1.

Selon d'autres modes de réalisation, qui peuvent être combinés entre eux:

- le mécanisme de déploiement peut comprendre une charge pyrotechnique d'éjection du parachute déclenchable électriquement par l'actionneur électrique ;
- le mécanisme de déploiement peut comprendre un ressort d'éjection du parachute libérable électriquement par l'actionneur électrique, le dispositif de contrôle automatique comprenant, en outre, un capteur de position de contrainte du ressort d'éjection et un moyen de comparaison de la position de contrainte mesurée par le capteur avec une position de contrainte seuil nominale minimale stockée dans la mémoire de stockage ;
- le mécanisme de déploiement peut comprendre une réserve de gaz d'éjection du parachute libérable électriquement par l'actionneur électrique, le dispositif de contrôle automatique comprenant, en outre, un capteur de pression de la réserve de gaz d'éjection et un moyen de comparaison de la pression de la réserve de gaz d'éjection avec une pression seuil nominale minimale stockée dans la mémoire de stockage ;
- l'interrupteur d'actionneur et l'interrupteur de test peuvent être des interrupteurs électroniques ;
- les interrupteurs peuvent être des transistors de type MOSFET ;

- le dispositif de contrôle automatique peut comprendre, en outre, un connecteur électromécanique au circuit électronique de déploiement, le connecteur électromécanique comprenant un contact qui ferme un circuit électrique uniquement lorsque le connecteur électromécanique est correctement branché ;
- le dispositif de contrôle automatique peut comprendre, en outre, un capteur de température et/ou d'humidité placé au plus proche du parachute, et dans lequel la mémoire de stockage comprend des valeurs seuil minimales et maximales de température et/ou d'humidité nominale ainsi que des valeurs de température et/ou d'humidité mesurées au cours du temps ; et/ou
- la mémoire de stockage peut contenir des informations temporelles d'historique d'au moins une opération d'une maintenance ainsi qu'au moins un délai de maintenance correspondant à une durée maximum autorisée entre deux opérations d'une maintenance déterminée.

L'invention a également pour objet un drone volant autonome comprenant un circuit électronique de vol et un système de parachute comprenant :

- un parachute;
- un mécanisme de déploiement,
- un circuit électronique de déploiement destiné à être relié au circuit électronique de vol et à appliquer une tension de fonctionnement pour commander le mécanisme de déploiement du parachute ; et
- un actionneur électrique du mécanisme de déploiement du parachute relié au circuit électronique de déploiement, l'actionneur présentant une résistance interne nominale, une résistance interne effective et un courant seuil d'activation à la tension de fonctionnement, l'actionneur étant relié à la masse électrique par un interrupteur d'actionneur commandable par le circuit électronique de déploiement, caractérisé en ce qu'il comprend un dispositif de contrôle automatique de l'état de service du système de parachute précédent.

L'invention a également pour objet une carte électronique d'actionnement de déploiement d'un parachute muni d'un mécanisme de déploiement pour un drone volant, la carte électronique comprenant un connecteur électrique destiné à être relié au mécanisme de déploiement, un connecteur électrique destiné à être relié à un circuit électronique de déploiement du drone volant apte à appliquer une tension de fonctionnement pour commander le mécanisme de déploiement du parachute, et un actionneur électrique du mécanisme de déploiement présentant une résistance interne nominale et un courant seuil d'activation à la tension de fonctionnement, l'actionneur électrique étant relié à la masse par un interrupteur d'actionneur commandable par le circuit électronique de déploiement, la carte électronique étant caractérisée en ce qu'elle comprend un dispositif de contrôle automatique de l'état de service d'un système de parachute précédent.

L'invention a également pour objet un kit de parachute comprenant un parachute muni d'un mécanisme de déploiement du parachute, caractérisé en ce qu'il comprend une carte électronique précédente.

Dans un mode de réalisation particulier, le kit de parachute peut comprendre, en outre, un circuit électronique de déploiement du parachute relié à l'actionneur électrique du mécanisme de déploiement du parachute, et comprenant un connecteur électrique destiné à être relié à un circuit électronique de vol d'un drone volant.

L'invention a également pour objet un procédé de contrôle automatique de l'état de service d'un système de parachute pour un drone volant conforme à la revendication 14.

Selon d'autres modes de réalisation, qui peuvent être combinés entre eux:

- le procédé peut comprendre, en outre, avant chaque décollage du drone, une étape de vérification de continuité électrique entre le circuit électronique de déploiement et le dispositif de contrôle automatique au travers du connecteur électromécanique (90), le drone étant interdit de décoller si aucune continuité électrique n'est détectée ;
- le procédé peut comprendre, en outre, avant chaque décollage du drone, une étape de comparaison des valeurs de température et/ou d'humidité mesurées au cours du temps avec des valeurs seuil minimales et maximales nominales de température et/ou d'humidité stockées en mémoire, le drone étant interdit de décoller si les valeurs de température et/ou d'humidité mesurées sont en dehors des valeurs seuil minimales et maximales nominales de température et/ou d'humidité stockées en mémoire ; et/ou
- le procédé peut comprendre, en outre, avant chaque décollage du drone et pour chaque opération de maintenance, une étape de comparaison de chaque information temporelle d'historique d'opérations de maintenance avec le délai de maintenance, le drone étant interdit de décoller si, pour au moins une opération de maintenance déterminée, une information temporelle d'historique dépasse le délai de maintenance de ladite opération de maintenance déterminée.

D'autres caractéristiques de l'invention seront énoncées dans la description détaillée ci-après, faite en référence aux dessins annexés, qui représentent, respectivement :

[Fig. 1], un diagramme fonctionnel d'un drone volant autonome équipé d'un dispositif de contrôle automatique de l'état de service d'un système de parachute selon l'invention ;
[Fig. 2], un schéma électrique d'un exemple d'un actionneur électrique du mécanisme de déploiement du parachute muni d'un dispositif de contrôle automatique de l'état de service du système de parachute selon l'invention, en position de test ;

[Fig. 3], un schéma électrique de l'actionneur électrique de la figure 2, en position de vol du drone ;

[Fig. 4], un schéma électrique de l'actionneur électrique de la figure 2, en position de déclenchement du parachute ;

[Fig. 5], un schéma électrique d'un premier mode de réalisation d'un actionneur électrique du mécanisme de déploiement du parachute muni d'un dispositif de contrôle automatique de l'état de service du système de parachute selon l'invention, en position de vol du drone, et comprenant une réserve d'énergie capacitive et un circuit de décharge; et

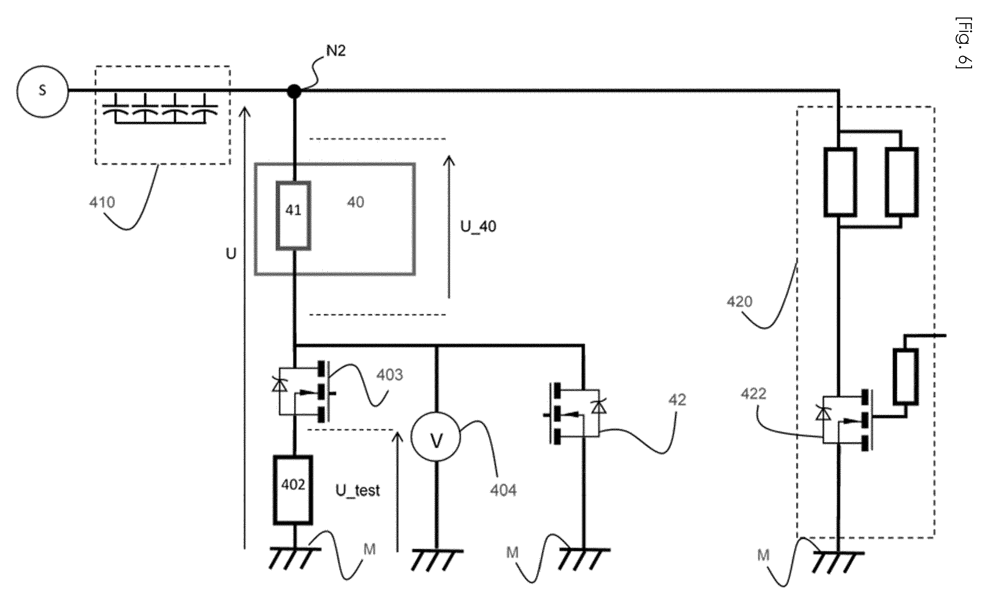

[Fig. 6], un schéma électrique de l'actionneur électrique de la figure 5, muni d'interrupteur MOSFET.

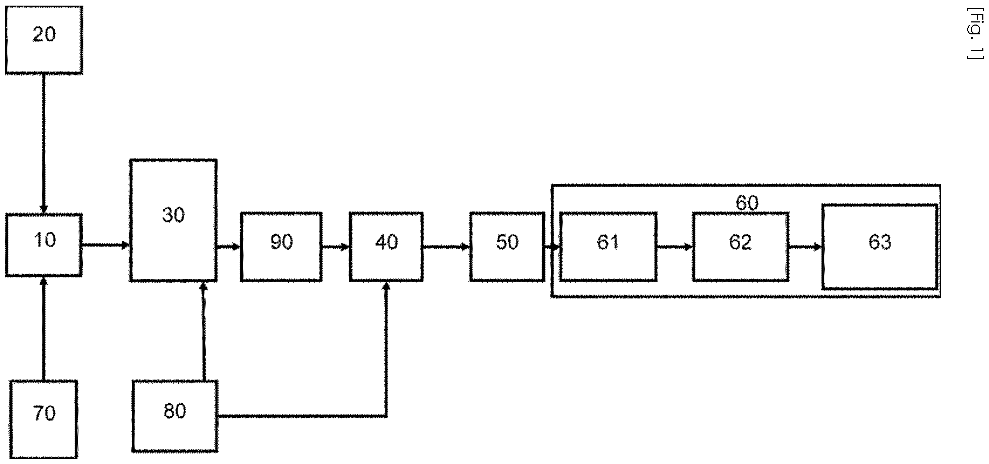

Pour garantir le bon fonctionnement du dispositif de parachute, il convient de vérifier l'ensemble des éléments constituant la chaîne de fonctionnement de celui-ci. La figure 1 illustre cette chaîne de fonctionnement. Comme décrit plus tard, certains éléments peuvent faire partie de différents ensembles selon les modes de réalisation.

La chaîne de fonctionnement 1 comprend essentiellement une électronique de vol 10, une mémoire de stockage 20, une électronique de déploiement 30 du parachute 60, un actionneur électrique 40 d'un mécanisme de déploiement 50 du parachute 60, et un parachute 60. Ce dernier est divisé, pour le contrôle automatique de l'état de service, en trois sous éléments fonctionnels : la voile 61, les suspentes 62 et les attaches de suspentes 63 sur le drone.

Le circuit électronique de vol 10 est en charge de déterminer s'il faut sortir le parachute 60 automatiquement ou bien en cas de réception d'un ordre en provenance d'un module de commande au sol 70 s'il est présent. Ce module 70 permet à un opérateur au sol de déclencher le parachute en cas de problème. Ce module 70 est optionnel et n'existe pas dans la chaîne de fonctionnement d'un drone autonome. En effet, ce dernier doit être programmé pour détecter lui-même les situations dangereuses nécessitant le déploiement du parachute.

La mémoire de stockage 20 stocke des données nominales de fonctionnement de certains éléments de la chaîne (en particulier, mais non exclusivement, l'actionneur électrique 40, le mécanisme de déploiement 50 et le parachute 60) et des données opérationnelles de vol issues de certains modules (en particulier, mais non exclusivement, le parachute 60). La mémoire de stockage 20 peut également comprendre des données entrées lors de la maintenance du drone.

Le circuit électronique de déploiement 30 est en charge de gérer l'activation du ou des actionneurs électriques 40 pour commander le mécanisme de déploiement 50 afin de libérer la voile 61 du parachute 60.

Le circuit électronique de déploiement 30 est relié, en utilisation, au circuit électronique de vol 10 et est programmé pour appliquer une tension de fonctionnement déterminée pour commander le mécanisme de déploiement du parachute et, par conséquent, le déploiement du parachute.

Il existe plusieurs types de mécanismes de déploiement 50 : mécanisme d'éjection par ressort, mécanisme d'éjection par gaz sous pression utilisant des cartouches de C02, mécanisme d'éjection par charge pyrotechnique.

Ils ont tous en commun d'être actionnés électriquement par un actionneur électrique 40. Il peut s'agir, selon les mécanismes d'éjection, d'un solénoïde, d'un servomoteur, d'un largueur électromécanique ou d'un initiateur pyrotechnique.

Le contrôle automatique de l'état de service du système de parachute selon l'invention vise en priorité à vérifier le bon fonctionnement de l'actionneur électrique 40.

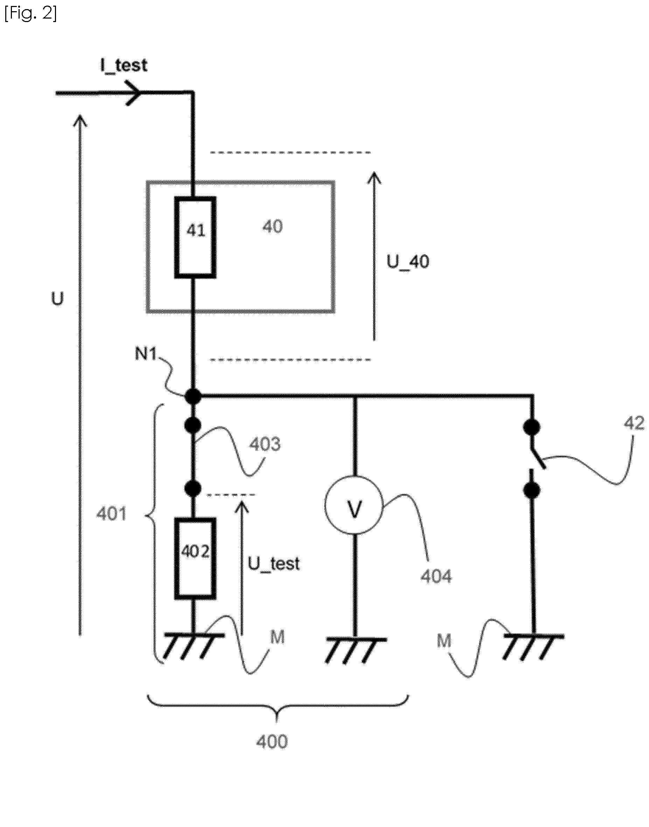

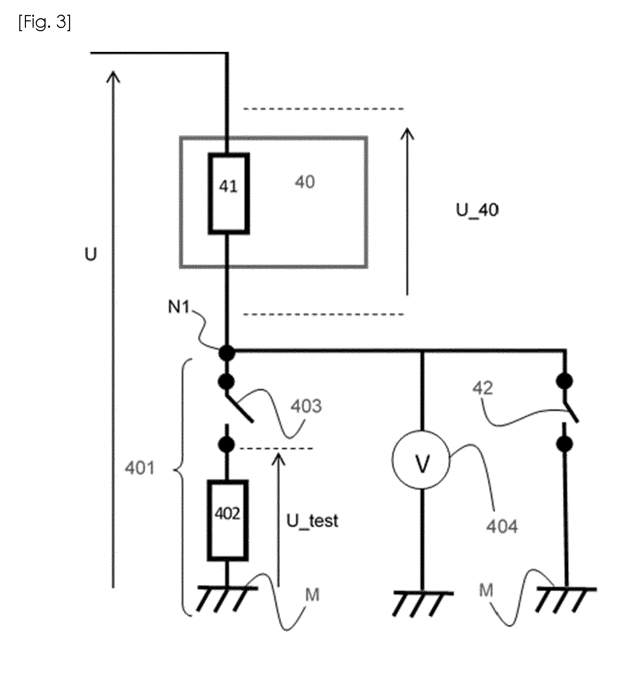

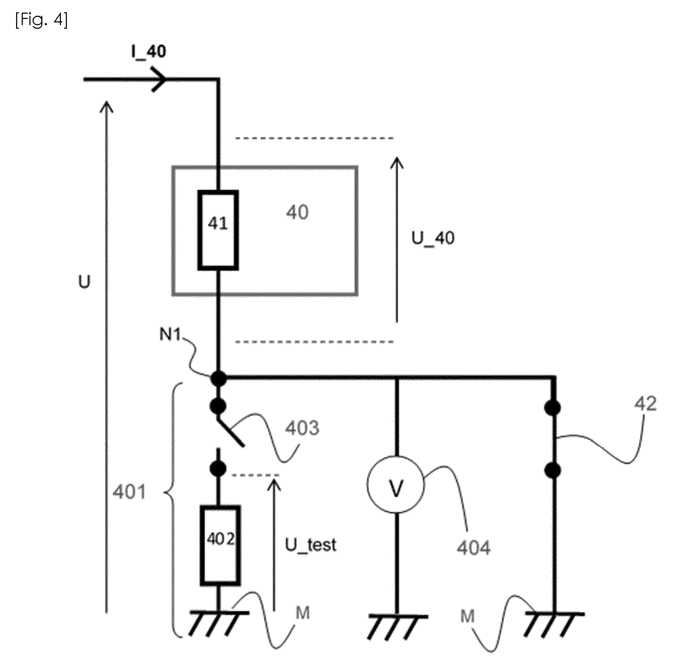

Les figures 2 à 4 illustrent le montage électrique d'un actionneur électrique 40 dans différentes configurations : vérification de l'état de fonctionnement de l'actionneur électrique 40 (figure 2), vol normal dans lequel le parachute n'est pas déclenché (figure 3), activation de l'actionneur électrique 40 pour déclencher le parachute en cas de crise (figure 4).

D'une manière générale, l'actionneur électrique 40 se caractérise par une résistance interne nominale $R\_40$ qui est une valeur théorique correspondant à un actionneur électrique 40 idéal en parfait état de fonctionnement. En réalité, l'actionneur électrique 40 présente une résistance interne effective $R\_41$ qui dépend de l'état de fonctionnement de l'actionneur électrique 40. Pour que l'actionneur électrique 40 soit considéré comme en état de fonctionnement, la résistance interne effective $R\_40$ doit être comprise entre deux valeurs seuil minimum et maximum $R\_40min$ et $R\_40max$ stockées dans la mémoire de stockage 20.

L'actionneur électrique 40 dépend du mécanisme de déploiement 50 du parachute.

Dans un mode de réalisation préféré, le mécanisme de déploiement comprend une charge pyrotechnique d'éjection du parachute déclenchable électriquement par l'actionneur électrique. Dans ce cas, l'actionneur électrique 40 est un initiateur pyrotechnique qui possède une résistance interne de l'ordre de 2 ohms. Il chauffe au passage d'un courant électrique et met à feu la charge pyrotechnique. La mise à feu intervient avec un courant de 5A pendant 10ms ou bien 4A durant 15ms tandis qu'un courant de 10mA permet de tester la résistance interne sans risque comme décrit ci-après.

Alternativement, le mécanisme de déploiement comprend un ressort d'éjection du parachute libérable électriquement par l'actionneur électrique.

Encore alternativement, le mécanisme de déploiement comprend une réserve de gaz d'éjection du parachute libérable électriquement par l'actionneur électrique.

Dans ces deux variantes, l'actionneur électrique peut être, par exemple, un solénoïde ou un largueur électromécanique.

Un solénoïde est constitué d'un bobinage électrique qui génère un champ magnétique déplacent une pièce ferromagnétique selon un mouvement linéaire. Il possède donc bien une résistance interne.

Un largueur électromécanique est soit un moteur soit un fil qui chauffe et casse tel un fusible libérant ainsi sa fonction mécanique. Il possède donc bien une résistance interne.

L'actionneur électrique 40 se caractérise également par un courant seuil d'activation I_40 à la tension de fonctionnement U appliquée par le circuit électronique de déploiement 30.

Pratiquement, l'actionneur électrique 40 est relié à la masse électrique M par un interrupteur d'actionneur 42 commandable par le circuit électronique de déploiement 30. Ainsi, lorsque ce dernier commande la fermeture de l'interrupteur d'actionneur 42, et applique la tension de fonctionnement U, un courant d'activation I_40 passe au travers de l'actionneur électrique 40 et déclenche le mécanisme de déploiement du parachute (figure 4).

Pour contrôler le bon fonctionnement d'un élément, on l'active dans les conditions d'utilisation. Or, pour l'actionneur électrique, cela conduirait à commander l'éjection du parachute, ce qui est inenvisageable pour des questions de coût, de disponibilité (le parachute éjecté, le drone ne peut plus voler avant qu'une personne de la maintenance ne soit intervenue) et de dangerosité, en particulier pour les parachutes à mécanisme de déploiement pyrotechnique qui peuvent blesser les personnes proches du drone.

La difficulté est de faire une mesure qui ne vienne pas accidentellement déclencher le déploiement lui-même. L'invention propose donc de mesurer un paramètre physique qui atteste du bon état de fonctionnement, mais sans toutefois activer l'actionneur électrique 40 lui-même. L'invention propose d'utiliser une caractéristique intrinsèque de l'actionneur électrique en mesurant la résistance électrique interne effective de l'actionneur. En effet, les différents actionneurs électriques 40 pouvant être utilisés dans l'invention possèdent tous une résistance électrique interne qui induit un courant d'actionnement lorsqu'une différence de potentiel est appliquée à ses bornes.

À cette fin, l'invention propose d'intégrer dans le circuit de l'actionneur électrique, un dispositif de contrôle 400 comprenant une branche de test résistive 401 ayant une résistance de test 402 de valeur déterminée montée en série avec un interrupteur de test 403 commandable par le circuit électronique de déploiement 30.

Selon l'invention, la branche de test est branchée en parallèle de l'interrupteur d'actionneur 42, entre la masse électrique M et un nœud de connexion N1

agencé entre l'actionneur 40 et l'interrupteur d'actionneur 42.

La valeur R_test de la résistance de test 402 est choisie pour générer un courant de test I_test inférieur au courant d'activation I_40 de l'actionneur 40 lorsque la tension de fonctionnement U est appliquée.

Ainsi, grâce au dispositif selon l'invention, en effectuant le test, il n'y a aucun risque que le courant I_test généré lors du test par l'application de la tension de fonctionnement U ne déclenche le parachute. De plus, la résistance de test 402 est également choisie pour que, si l'actionneur est en court-circuit, le courant de test I_test induit reste quand même inférieur au courant d'activation I_40.

Le dispositif de contrôle 400 selon l'invention comprend également un circuit de mesure de tension 404 entre les bornes de la résistance de test 402 et un moyen de calcul d'une résistance interne effective de l'actionneur électrique. Ce moyen de calcul n'est pas illustré, mais il peut s'agir, par exemple, du circuit électronique de déploiement 30, du circuit électronique de vol 10, ou d'un circuit électronique muni d'un processeur de calcul indépendant situé à proximité de l'actionneur électrique, par exemple sur la même carte électronique.

Ainsi, le moyen de calcul est programmé pour calculer la résistance interne effective R_41 de l'actionneur électrique 40 comme expliqué ci-après.

Pour effectuer le contrôle de l'état de service de l'actionneur électrique 40, le circuit électronique de déploiement 30 ouvre (ou maintient ouvert) l'interrupteur d'actionneur 42 et ferme l'interrupteur de test 403 (figure 2). Puis, il applique une tension de fonctionnement U dans le circuit comprenant l'actionneur électrique 40 et la branche de test résistive 401, la tension de fonctionnement U étant égale à la somme de la tension U_40 aux bornes de l'actionneur 40 et de la tension U_test aux bornes de la résistance de test 402. L'application de cette tension de fonctionnement U génère un courant de test I_test d'intensité inférieure à l'intensité d'activation de l'actionneur électrique. Ainsi, au cours du test, le courant I_test traversant l'actionneur électrique 40 est insuffisant à déclencher ledit actionneur.

Puis le circuit électronique de déploiement 30 mesure la tension U_test aux bornes de la résistance de test 402 avec le circuit de mesure de tension 404.

À partir de la tension U_test mesurée aux bornes de la résistance de test 402 et de la résistance de test 402 de valeur R_test déterminée, le circuit électronique de déploiement 30 calcule avec la loi d'Ohm la valeur du courant de test I_test généré par l'application de la tension de fonctionnement :

$$I\_test = U\_test / R\_test$$

Une fois la valeur calculée du courant de test I_test calculé, le circuit électronique de déploiement 30 peut calculer avec la loi d'Ohm la résistance interne effective R_41 de l'actionneur électrique 40 avec la tension de fonctionnement U, la tension U_test mesurée aux bornes de la résistance de test 402 :

$$\text{Puisque } U = U\_test + U\_40,$$

Où U_40 est la tension aux bornes de l'actionneur électrique 40, alors

$$U\_40 = U - U\_test$$

Or,

$$U\_40 = R\_41 * I\_test$$

Donc

$$R\_41 = U\_40 / I\_test$$

C'est-à-dire

$$R\_41 = (U - U\_test) / I\_test$$

On peut alors comparer la résistance interne effective R_41, calculée de l'actionneur électrique 40, avec des valeurs seuil minimales et maximales maximum R_40min et R_40max de résistance interne nominale R_40 de l'actionneur électrique 40 stockées dans la mémoire de stockage 20.

À cette fin, le dispositif de contrôle 400 selon l'invention comprend un moyen de comparaison de la résistance interne effective calculée R_41 de l'actionneur 40 avec les valeurs minimales et maximales R_40min et R_40max de résistance interne nominale R_40 de l'actionneur électrique stockées dans la mémoire de stockage 20.

Si la résistance interne effective R_41 de l'actionneur électrique est comprise entre les valeurs seuil minimales et maximales R_40min et R_40max de résistance interne nominale, cela signifie que l'actionneur électrique 40 est en état de fonctionnement et le circuit électronique de vol 20 peut autoriser le décollage du drone qui pourra déclencher le parachute correctement en cas de problème.

Dans ce cas, au cours du vol, le circuit électronique de déploiement 30 ouvre l'interrupteur de test 403 et l'interrupteur d'actionneur 42 (figure 3). Si une situation dangereuse est détectée par le circuit électronique de vol 10, ce dernier commande le circuit électronique de déploiement 30 qui va fermer l'interrupteur d'actionneur 42 (figure 4), ce qui déclenchera le déploiement du parachute.

Au contraire, si la résistance interne effective R_41 de l'actionneur électrique est inférieure à la valeur seuil minimale R_40min ou supérieure à la valeur seuil maximale R_40max, cela signifie que l'actionneur électrique 40 est respectivement proche du court-circuit (résistance électrique très faible tendant vers celle un simple fil électrique) ou proche de la rupture (résistance électrique très forte tendant vers celle d'un circuit ouvert). Dans ces deux cas, l'actionneur électrique 40 est hors d'usage et le circuit électronique de vol 20 interdit le décollage du drone qui ne pourrait pas déclencher correctement le parachute en cas de problème.

Dans un mode de réalisation préféré, le circuit électronique de déclenchement 30 vérifie également que le drone dispose d'une réserve d'énergie suffisante pour pouvoir déclencher le parachute en cas de problème.

Dans le cas d'un parachute à mécanisme de déploiement pyrotechnique, le circuit électronique de déclenchement 30 vérifie uniquement la réserve électrique. Cela se fait, par exemple, par une mesure du niveau de voltage de la réserve électrique (de la batterie ou d'une réserve dédiée ; voir ci-après) avant chaque vol et la compare avec une tension seuil définie dans la mémoire de stockage 20.

Dans le cas d'un mécanisme de déploiement mécanique (ressort / élastique), le circuit électronique de déclenchement 30 vérifie au moins que la réserve électrique est suffisante pour actionner le mécanisme de déploiement mécanique.

De préférence, le dispositif de contrôle automatique comprend, en outre, un capteur de position de contrainte du ressort d'éjection et un moyen de comparaison de la position de contrainte mesurée par le capteur avec une position de contrainte seuil nominale minimale stockée dans la mémoire de stockage.

Ce capteur permet au circuit électronique de déclenchement 30 de vérifier également la réserve d'énergie mécanique nécessaire au bon déploiement du parachute, en s'assurant que le ressort est bandé au-delà d'une position garantissant la bonne accumulation d'énergie mécanique pour garantir le bon déploiement de la voile.

Dans le cas d'un mécanisme de déploiement à gaz, le circuit électronique de déclenchement 30 vérifie au moins que la réserve électrique est suffisante pour libérer la réserve de gaz d'éjection.

De préférence, le dispositif de contrôle automatique comprend, en outre, un capteur de pression de la réserve de gaz d'éjection et un moyen de comparaison de la pression de la réserve de gaz d'éjection avec une pression seuil nominale minimale stockée dans la mémoire de stockage

Ce capteur permet au circuit électronique de déclenchement 30 de vérifier également que la réserve pneumatique est suffisante pour le déploiement du parachute.

Alternativement ou en combinaison, dans un mode de réalisation avantageux, le dispositif de contrôle automatique 400 selon l'invention comprend, en outre, une réserve d'énergie électrique indépendante destinée à alimenter l'actionneur électrique 40 sur commande du circuit électronique de déploiement 30, indépendamment de l'alimentation électrique principale (la batterie) du drone. La réserve d'énergie électrique garantit ainsi une réserve suffisante pour que le déploiement du parachute puisse se faire en totale autonomie électrique.

Dans une première variante, la réserve d'énergie électrique indépendante est constituée par une batterie secondaire dont le bon niveau de charge est vérifié par le circuit électronique de déploiement 30 avant chaque vol. Si la charge est insuffisante, le drone est interdit de voler.

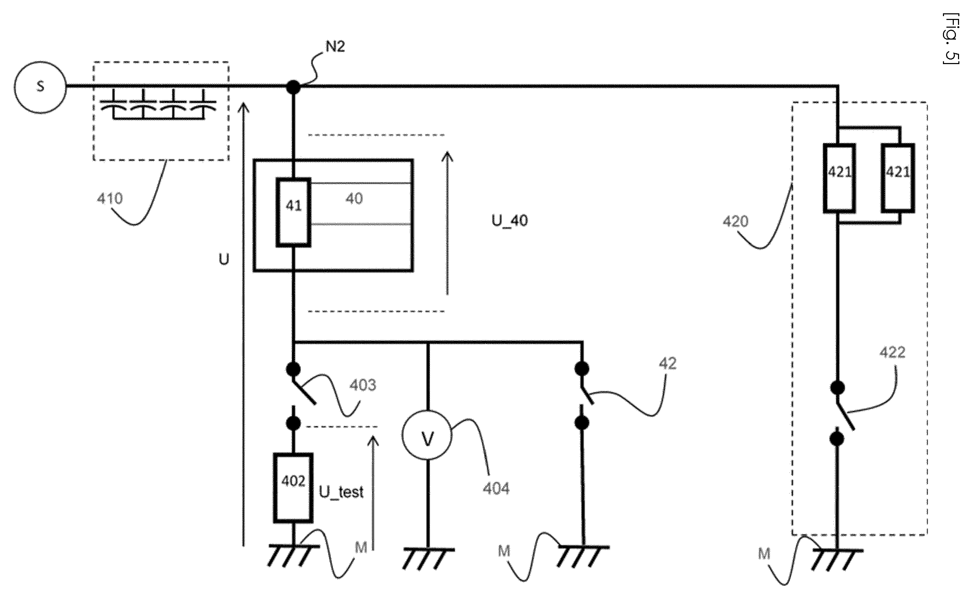

Dans un mode de réalisation préféré, illustré en figure 5, le dispositif de contrôle automatique 400 selon l'invention comprend, en outre, une réserve d'énergie électrique capacitive 410 destinée à être agencée entre une source d'énergie électrique S (la batterie principale du drone ou, de préférence, l'alimentation électrique de la station d'accueil du drone avant le décollage) et l'actionneur électrique 40 pour être chargée par la source d'énergie S et pour pouvoir alimenter l'actionneur 40 sur commande du circuit électronique de déploiement 30.

La réserve d'énergie capacitive comprend des capacités dont le nombre et les caractéristiques sont choisis pour permettre le déclenchement du mécanisme de déploiement. Par exemple, lorsque ce dernier est une charge pyrotechnique, la source d'énergie capacitive est dimensionnée pour pouvoir délivrer 5A pendant 10ms ou bien 4A durant 15ms afin de permettre le déclenchement de la charge.

Par sécurité, de préférence, on surdimensionne cette réserve capacitive pour qu'elle stocke plus d'énergie que nécessaire au déclenchement du mécanisme de déploiement.

Outre sa puissance et sa rapidité, cette réserve d'énergie électrique capacitive 410 présente l'intérêt de pouvoir être déchargée pour éviter tout déclenchement intempestif du parachute.

À cette fin, le dispositif de contrôle automatique 400 selon l'invention comprend, en outre, un circuit de décharge 420 de la réserve d'énergie capacitive 410. Le circuit de décharge 420 est agencé en parallèle de l'actionneur 40, entre la masse électrique M et un nœud de connexion N2 agencé entre la réserve d'énergie capacitive 410 et l'actionneur 40.

Ce circuit comprend une ou plusieurs résistances 421 capables de dissiper une puissance électrique suffisante pour décharger l'énergie stockée dans la réserve d'énergie capacitive 410 en un temps de décharge suffisamment court pour mettre le circuit en sécurité après la fin du vol, et avant qu'une personne ne se charge de la maintenance.

Par exemple, on dimensionnera la ou les résistances pour que la décharge se fasse entre 2 et 25 secondes, de préférence entre 3 et 10 secondes, avantageusement entre 4 et 6 secondes.

Ainsi, pour dimensionner le circuit de décharge 420, il convient de choisir une ou des résistances assez faibles pour permettre une dissipation rapide de l'énergie, mais capables de supporter la chaleur générée par la décharge sans être altérées.

Ainsi, avant chaque décollage du drone, le circuit électronique de déploiement commande la charge de la réserve d'énergie capacitive 410 par une source d'énergie S (la batterie du drone ou, de préférence, l'alimentation électrique de la station d'accueil du drone avant le décollage) pour permettre le déploiement du parachute en cas de problème durant le vol.

Après chaque atterrissage, le circuit électronique de déploiement 30 commande la décharge de la réserve d'énergie capacitive 410 dans le circuit de décharge 420. Pour cela, le circuit électronique de déploiement ouvre ou maintien ouvert l'interrupteur d'actionneur 42, l'interrupteur ferme l'interrupteur de test 403, et ferme l'interrupteur de décharge 422 du circuit de décharge 420.

Ainsi, lorsque le drone est au sol et donc lorsque le parachute n'est plus nécessaire, le circuit électronique de déploiement 30 commande la décharge de la réserve d'énergie 410 et vérifie ensuite le bon déchargement. Si la réserve n'est pas correctement déchargée, le circuit électronique de déploiement 30 informe l'opérateur en charge de la maintenance de l'état « armé » du parachute (et donc de son déclenchement accidentel potentiel) soit par un avertisseur lumineux ou sonore, soit par un message numérique vers une interface personne-machine du système de gestion de vol du drone autonome.

Afin de permettre une commande du dispositif de contrôle automatique et du circuit de décharge selon l'invention par le circuit électronique de déploiement 30, les différents interrupteurs, et notamment l'interrupteur d'actionneur 42, l'interrupteur de test 403 et l'interrupteur de décharge 422 sont des interrupteurs électroniques, de préférence des transistors de type MOSFET pour éviter les effets d'usure prématurée liés aux ouvertures/fermetures des contacts électromécaniques électriques.

Certains actionneurs électriques 40 tels que les initiateurs pyrotechniques présentent des risques de manipulation qui imposent de les débrancher avant chaque manipulation pour éviter tout risque d'explosion. Il existe donc un risque que la personne en charge de la maintenant oublie de rebrancher l'actionneur électrique 40 ou le rebranche mal. Cela impose donc avant chaque vol de vérifier que le connecteur a bien été rebranché afin d'éviter tout risque d'erreur humaine de manipulation.

Dans un souci de facilité de montage et/ou de remplacement et/ou d'entretien, l'actionneur électrique 40 du dispositif de contrôle automatique selon l'invention peut être connecté au circuit électronique de déploiement 30 via un connecteur électromécanique 90 permettant de les débrancher facilement.

Ainsi, le connecteur électromécanique 90 comprend un contact qui ferme le circuit électrique uniquement si le connecteur électromécanique 90 est correctement branché. S'il n'est pas correctement branché, la continuité électrique n'est pas assurée. Le circuit électronique de déploiement peut alors tester l'état de ce circuit électrique afin de s'assurer avant chaque décollage de la bonne connexion du connecteur. S'il n'est pas correctement connecté, le décollage est interdit.

Ainsi, avant chaque décollage du drone, le circuit électronique de déploiement 30 vérifie de continuité électrique entre le circuit électronique de déploiement 30 et le dispositif de contrôle automatique 400 au travers du contact électromécanique 90 , le drone étant interdit de décoller si aucune continuité électrique n'est détectée.

Avantageusement, le dispositif de contrôle automatique selon l'invention comprend également un capteur de température et/ou d'humidité placé au plus proche du parachute 60. Dans ce cas, la mémoire de stockage 20 comprend également des valeurs seuil minimales et maximales de température et/ou d'humidité nominale ainsi que des valeurs de température et/ou d'humidité mesurées au cours du temps et inscrites dans la mémoire de stockage par le circuit électronique de vol 10 ou le circuit électronique de déploiement 30.

De cette manière, si le taux d'humidité, par exemple, dépasse une valeur seuil stockée dans la mémoire 20, le circuit électronique de déploiement 30 interdit le vol et une information est envoyée à l'opérateur pour prévoir une opération de maintenance.

· La voile du parachute 61 qui se déploie en cas d'actionnement a pour rôle de ralentir la chute du drone. Elle doit donc correctement se déployer et s'ouvrir afin de fournir la totalité de son potentiel.

· Les suspentes 62 relient la voile 61 au drone. Elles doivent résister au choc brutal de la décélération abrupte du drone lors de l'ouverture rapide de la voile.

· L'attache des suspentes 63 sur le drone doit elle aussi résister au choc mécanique provoqué par le ralentissement brutal du drone.

Le bon fonctionnement de l'ensemble du parachute 60 de cette chaîne de sous-ensembles fonctionnels 61-62-63 est garanti normalement par différentes inspections effectuées par un opérateur à différents intervalles : avant chaque vol, après chaque utilisation, lors de l'installation du parachute, etc.

Par exemple, la voile et les suspentes doivent être inspectées à chaque pliage du parachute pour détecter d'éventuels défauts. Le parachute doit également être déplié au minimum chaque année afin de faire sécher la voile de l'humidité qu'elle aurait pu accumuler et qui a tendance à « coller » la toile sur elle-même et perturbant ainsi sa bonne ouverture.

La mémoire de stockage 20, qui stocke les différents niveaux de seuils considérés comme nominaux afin de valider le bon fonctionnement du parachute, peut également être mise à jour manuellement, à chaque fois qu'une opération de maintenance majeure est effectuée sur le parachute. En particulier, il faut garder la trace des opérations de dépliage et de séchage de la voile et des suspentes du parachute pour des raisons de traçabilité. La mémoire permet donc à un opérateur d'entrer des dates de rappel. La date en mémoire est alors comparée avec le temps universel UTC connu par le drone afin de prévenir automatiquement l'utilisateur quand une opération de maintenance doit être faite. Le dispositif peut également interdire le redécollage du drone si la date limite d'utilisation du parachute est dépassée. On évite ainsi toute erreur humaine concernant le respect des dates limites d'utilisation du parachute.

Ainsi, avant chaque décollage du drone, le circuit électronique de déploiement 30 compare les valeurs de température et/ou d'humidité mesurées au cours du temps par le/les capteurs avec des valeurs seuil minimales et maximales nominales de température et/ou d'humidité stockées en mémoire 20. Le drone est alors interdit de décoller si les valeurs de température et/ou d'humidité mesurées sont en dehors des valeurs seuil minimales et maximales nominales de température et/ou d'humidité stockées en mémoire.

Un premier mode d'exploitation de l'invention est constitué par un drone volant, de préférence autonome comprenant un circuit électronique de vol et un système de parachute comprenant un parachute, un mécanisme de déploiement, un circuit électronique de déploiement relié au circuit électronique de vol et à appliquer une tension de fonctionnement pour commander le mécanisme de déploiement du parachute, et un actionneur électrique du mécanisme de déploiement du parachute relié au circuit électronique de déploiement.

Comme décrit précédemment, l'actionneur présente une résistance interne nominale et un courant seuil d'activation à la tension de fonctionnement.

L'actionneur électrique est relié à la masse par un interrupteur d'actionneur commandable par le circuit électronique de déploiement, et il comprend un dispositif de contrôle automatique de l'état de service du système de parachute.

Ce dispositif de contrôle automatique comprend une branche de test résistive 401 comprenant une résistance de test 402 de valeur déterminée montée en série avec un interrupteur de test 403 commandable par le circuit électronique de déploiement. La branche de test est branchée en parallèle de l'interrupteur d'actionneur 42, entre la masse et un nœud de connexion N1 agencé entre l'actionneur 40 et l'interrupteur d'actionneur 42.

Comme décrit précédemment, la valeur $R\_test$ de la résistance de test 402 est choisie pour générer un courant de test $I\_test$ inférieur au courant d'activation $I\_40$ de l'actionneur 40 lorsque la tension de fonctionnement $U$ est appliquée ou que l'actionneur est en court-circuit

Le dispositif de contrôle automatique comprend également : un circuit de mesure de tension 404 entre les bornes de la résistance de test 402, un moyen de calcul de la résistance interne effective R_41 de l'actionneur électrique, une mémoire de stockage 20 comprenant au moins des valeurs seuil minimales et maximales de résistance interne nominale de l'actionneur électrique, et un moyen de comparaison de la résistance interne effective calculée de l'actionneur avec les valeurs minimales et maximales de résistance interne nominale de l'actionneur électrique stockées dans la mémoire de stockage 20 (de préférence le circuit électronique de déploiement est programmé à cet effet).

Un autre mode d'exploitation de l'invention peut consister à vendre séparément du drone volant et du parachute lui-même une carte électronique de déploiement du parachute spécialement adaptée pour permettre également un contrôle automatique de l'état de service du parachute. Dans ce cas, le parachute est muni de son propre mécanisme de déploiement, et le drone volant comprend un circuit électronique de vol.

La carte électronique selon l'invention comprend un connecteur électrique destiné à être relié au mécanisme de déploiement, et un connecteur électrique destiné à être relié au circuit électronique de déploiement du drone volant. Alternativement, le circuit électronique de déploiement peut être porté par la carte électronique elle-même. Dans ce cas, elle comprend un connecteur électrique entre le circuit électronique de déploiement de la carte et le circuit électronique de vol du drone, ce dernier étant programmé pour commander au circuit électronique de déploiement de la carte d'appliquer une tension de fonctionnement pour commander le mécanisme de déploiement du parachute.

Dans les deux cas, la carte comprend également un actionneur électrique du mécanisme de déploiement présentant une résistance interne nominale et un courant seuil d'activation à la tension de fonctionnement. L'actionneur électrique est relié à la masse par un interrupteur d'actionneur commandable par le circuit électronique de déploiement.

Enfin, la carte électronique comprend un dispositif de contrôle automatique de l'actionneur électrique du mécanisme de déploiement du parachute.

Ce dispositif de contrôle automatique comprend une branche de test résistive 401 comprenant une résistance de test 402 de valeur déterminée montée en série avec un interrupteur de test 403 commandable par le circuit électronique de déploiement. La branche de test est branchée en parallèle de l'interrupteur d'actionneur 42, entre la masse et un nœud de connexion N1 agencé entre l'actionneur 40 et l'interrupteur d'actionneur 42.

Comme décrit précédemment, la valeur R_test de la résistance de test 402 est choisie pour générer un courant de test I_test inférieur au courant d'activation I_40 de l'actionneur 40 lorsque la tension de fonctionnement U est appliquée et que l'actionneur est en court-circuit

Le dispositif de contrôle automatique comprend également : un circuit de mesure de tension 404 entre les bornes de la résistance de test 402, un moyen de calcul de la résistance interne effective R_41 de l'actionneur électrique, une mémoire de stockage 20 comprenant au moins des valeurs seuil minimales et maximales de résistance interne nominale de l'actionneur électrique, et un moyen de comparaison de la résistance interne effective calculée de l'actionneur avec les valeurs minimales et maximales de résistance interne nominale de l'actionneur électrique stockées dans la mémoire de stockage 20 (de préférence le circuit électronique de déploiement est programmé à cet effet).

Dans un mode d'exploitation alternatif, l'invention peut être exploitée sous la forme d'un kit de parachute comprenant un parachute muni d'un mécanisme de déploiement du parachute, et de la carte électronique précédente.

Comme décrit précédemment, la carte électronique du kit de parachute peut comprendre, en outre, un circuit électronique de déploiement du parachute relié à l'actionneur électrique du mécanisme de déploiement du parachute, et un connecteur électrique destiné à être relié à un circuit électronique de vol d'un drone volant.

Dans les deux modes d'exploitation précités (carte électronique et kit de parachute), les connecteurs électriques sont avantageusement des connecteurs électromécaniques 90 comprenant un contact qui ferme un circuit électrique uniquement lorsque le connecteur électromécanique 90 est correctement branché.

Grâce au dispositif selon l'invention, il est possible de vérifier l'état de service du parachute avant le décollage ou pendant le vol.

La séquence de vérification peut être la suivante :

· Lorsque le drone veut décoller, le circuit électronique de vol 10 demande au circuit électronique de déploiement 30 si le dispositif de parachute est prêt. Par la même occasion, cela permet de vérifier la bonne communication entre les deux circuits électroniques 10 et 30 du drone.

· Le circuit électronique de déploiement 30 rafraîchit les paramètres seuils depuis la mémoire.

· Si la réserve d'énergie électrique est déchargeable et dans un état déchargé, l'électronique charge la réserve d'énergie électrique, et mesure qu'elle est bien opérante.

· Puis, le circuit électronique de déploiement 30 vérifie que le/les connecteur(s) est/sont bien branché(s), et valide que le niveau d'humidité est conforme vis-à-vis des seuils nominaux en mémoire.

· Le circuit électronique de déploiement 30 valide ensuite que l'actionneur électrique 40 est bien présent et/ou possède la bonne valeur de résistance interne effective.

· Si tous les tests sont satisfaisants, le circuit électronique de déploiement 30 informe le circuit électronique de vol 10 que le parachute est pleinement opérationnel. Le vol est alors autorisé.

Dans le cas où l'un des tests serait négatif, le circuit électronique de déploiement 30 informe le circuit électronique de vol 10 que le parachute n'est pas opérationnel. Le décollage est alors interdit. Un opérateur est alors informé de la nécessité d'une maintenance.

Dans le cas où l'un des tests serait négatif et si la réserve d'énergie électrique est déchargeable et dans un état chargée, l'électronique décharge la réserve d'énergie électrique, et mesure qu'elle est bien déchargée afin de mettre en sécurité le système.

Si le drone fait partie d'une flotte de drone gérée par un système automatique, ce dernier peut décider de commander automatiquement le vol d'un autre drone disponible de la flotte et situé à proximité pour remplir la mission précédemment assignée au drone interdit de vol.

## Revendications

**1.** Dispositif de contrôle automatique (400) de l'état de service d'un système de parachute pour un drone volant qui comprend un circuit électronique de vol (10), le système de parachute comprenant :

- un parachute (60) ;
- un mécanisme de déploiement (50) ;
- un circuit électronique de déploiement (30) destiné à être relié au circuit électronique de vol (10) et à appliquer une tension de fonctionnement (U) pour commander le mécanisme de déploiement (50) du parachute ; et
- un actionneur électrique (40) du mécanisme de déploiement du parachute relié au circuit électronique de déploiement (30), l'actionneur électrique (40) présentant une résistance interne nominale (R_40), une résistance interne effective (R_41) et un courant seuil d'activation (I_40) à la tension de fonctionnement (U), l'actionneur étant relié à la masse électrique (M) par un interrupteur d'actionneur (42) commandable par le circuit électronique de déploiement, le dispositif de contrôle (400) comprenant:

- une branche de test résistive (401) comprenant une résistance de test (402) de valeur (R_test) déterminée montée en série avec un interrupteur de test (403) commandable par le circuit électronique de déploiement (30), la branche de test étant branchée en parallèle de l'interrupteur d'actionneur (42), entre la masse électrique (M) et un premier nœud de connexion (N1)

agencé entre l'actionneur électrique (40) du mécanisme de déploiement du parachute et l'interrupteur d'actionneur (42), la valeur (R_test) de la résistance de test (402) étant choisie pour générer un courant de test (I_test) inférieur au courant d'activation (I_40) de l'actionneur électrique (40) lorsque la tension de fonctionnement (U) est appliquée, et pour que, si l'actionneur est en court-circuit, le courant de test (I_test) induit reste inférieur au courant d'activation (I_40)

- un circuit de mesure de tension (404) entre les bornes de la résistance de test ;
- un moyen de calcul d'une résistance interne effective de l'actionneur électrique
- une mémoire de stockage (20) comprenant au moins des valeurs seuil minimales (R_40min) et maximales (R_40max) de résistance interne nominale (R_40) de l'actionneur électrique ; et
- un moyen de comparaison de la résistance interne effective (R_41) calculée de l'actionneur avec les valeurs minimales (R_40min) et maximales (R_40max) de résistance interne nominale (R_40) de l'actionneur électrique (40) stockées dans la mémoire de stockage (20) ;

et comprenant, en outre :

- une réserve d'énergie électrique capacitive (410) destinée à être agencée entre une source d'énergie (S) du drone et l'actionneur électrique (40) pour être chargée par la source d'énergie (S) du drone et alimenter l'actionneur (40) sur commande du circuit électronique de déploiement (30),
- un circuit de décharge (420) de la réserve d'énergie électrique capacitive (410) agencé en parallèle de l'actionneur (40), entre la masse électrique (M) et un deuxième nœud de connexion (N2) agencé entre lc réserve d'énergie électrique capacitive (410) et l'actionneur (40).

**2.** Dispositif de contrôle automatique selon la revendication 1, dans lequel le mécanisme de déploiement (50) comprend une charge pyrotechnique d'éjection du parachute déclenchable électriquement par l'actionneur électrique.

**3.** Dispositif de contrôle automatique selon la revendication 1, dans lequel le mécanisme de déploiement (50) comprend un ressort d'éjection du parachute libérable électriquement par l'actionneur électrique, le dispositif de contrôle automatique comprenant, en outre, un capteur de position de contrainte du ressort d'éjection et un moyen de comparaison de la position de contrainte mesurée par le capteur avec une position de contrainte seuil nominale minimale stockée dans la mémoire de stockage.

4. Dispositif de contrôle automatique selon la revendication 1, dans lequel le mécanisme de déploiement (50) comprend une réserve de gaz d'éjection du parachute libérable électriquement par l'actionneur électrique, le dispositif de contrôle automatique comprenant, en outre, un capteur de pression de la réserve de gaz d'éjection et un moyen de comparaison de la pression de la réserve de gaz d'éjection avec une pression seuil nominale minimale stockée dans la mémoire de stockage.

5. Dispositif de contrôle automatique selon l'une quelconque des revendications 1 à 4, dans lequel l'interrupteur d'actionneur (42) et l'interrupteur de test (403) sont des interrupteurs électroniques.

6. Dispositif de contrôle automatique selon la revendication 5, dans lequel les interrupteurs sont des transistors de type MOSFET.

7. Dispositif de contrôle automatique selon l'une quelconque des revendications 1 à 6, comprenant, en outre, un connecteur électromécanique (90) au circuit électronique de déploiement, le connecteur électromécanique (90) comprenant un contact qui ferme un circuit électrique uniquement lorsque le connecteur électromécanique (90) est correctement branché.

8. Dispositif de contrôle automatique selon l'une quelconque des revendications 1 à 7, comprenant, en outre, un capteur de température et/ou d'humidité placé au plus proche du parachute, et dans lequel la mémoire de stockage comprend des valeurs seuil minimales et maximales de température et/ou d'humidité nominale ainsi que des valeurs de température et/ou d'humidité mesurées au cours du temps.

9. Dispositif de contrôle automatique selon l'une quelconque des revendications 1 à 8, dans lequel la mémoire de stockage (20) contient des informations temporelles d'historique d'au moins une opération d'une maintenance ainsi qu'au moins un délai de maintenance correspondant à une durée maximum autorisée entre deux opérations d'une maintenance déterminée.

10. Drone volant autonome comprenant un circuit électronique de vol (10) et un système de parachute comprenant :

   • un parachute (60) ;
   • un mécanisme de déploiement (50)
   • un circuit électronique de déploiement (30) destiné à être relié au circuit électronique de vol (10) et à appliquer une tension de fonctionnement (U) pour commander le mécanisme de déploiement du parachute ; et
   • un actionneur électrique (40) du mécanisme de déploiement du parachute relié au circuit électronique de déploiement, l'actionneur présentant une résistance interne nominale (R_40), une résistance interne effective (R_41) et un courant seuil d'activation (I_40) à la tension de fonctionnement (U), l'actionneur étant relié à la masse électrique (M) par un interrupteur d'actionneur commandable par le circuit électronique de déploiement, **caractérisé en ce qu'**il comprend un dispositif de contrôle automatique (400) de l'état de service du système de parachute selon l'une quelconque des revendications 1 à 9.

11. Carte électronique d'actionnement de déploiement d'un parachute muni d'un mécanisme de déploiement pour un drone volant, la carte électronique comprenant un connecteur électrique destiné à être relié au mécanisme de déploiement (50), un connecteur électrique destiné à être relié à un circuit électronique de déploiement (30) du drone volant apte à appliquer une tension de fonctionnement (U) pour commander le mécanisme de déploiement (30) du parachute (60), et un actionneur électrique (40) du mécanisme de déploiement (50) présentant une résistance interne nominale (R_40), une résistance interne effective (R_41) et un courant seuil d'activation (I_40) à la tension de fonctionnement, l'actionneur électrique étant relié à la masse (M) par un interrupteur d'actionneur (42) commandable par le circuit électronique de déploiement, la carte électronique étant **caractérisée en ce qu'**elle comprend un dispositif de contrôle automatique de l'état de service d'un système de parachute selon l'une quelconque des revendications 1 à 9.

12. Kit de parachute comprenant un parachute (60) muni d'un mécanisme de déploiement du parachute (50), **caractérisé en ce qu'**il comprend une carte électronique selon la revendication 11.

13. Kit de parachute selon la revendication 12, comprenant, en outre, un circuit électronique de déploiement (30) du parachute relié à l'actionneur électrique du mécanisme de déploiement du parachute, et comprenant un connecteur électromécanique (90) destiné à être relié à un circuit électronique de vol (10) d'un drone volant.

14. Procédé de contrôle automatique de l'état de service d'un système de parachute pour un drone volant qui comprend un circuit électronique de vol (10), le système de parachute comprenant :

• un parachute (60) ;
• un circuit électronique de déploiement (30) du parachute destiné à être relié au circuit électronique de vol et
• un actionneur électrique (40) d'un mécanisme de déploiement du parachute (50) présentant une résistance interne nominale (R_40), une résistance interne effective (R_41) et un courant seuil d'activation (I_40) à la tension de fonctionnement, l'actionneur électrique étant relié à la masse (M) par un interrupteur d'actionneur (42) commandable par le circuit électronique de déploiement ,

le drone comprenant un dispositif de contrôle automatique selon la revendication 1;

le procédé de contrôle comprenant les étapes suivantes :

i) brancher une branche de test résistive (401) comprenant une résistance de test (402) de valeur (R_test) déterminée montée en série avec un interrupteur de test (403) commandable par le circuit électronique de déploiement (30), la branche de test étant branchée en parallèle de l'interrupteur d'actionneur (42), entre la masse électrique (M) et un premier nœud de connexion (N1) agencé entre l'actionneur électrique (40) du mécanisme de déploiement du parachute et l'interrupteur d'actionneur (42) ;

ii) ouvrir l'interrupteur d'actionneur (42) et fermer l'interrupteur de test (403) ;

iii) appliquer une tension de fonctionnement (U) entre une borne de l'actionneur et la masse, la tension de fonctionnement étant égale à la somme de la tension (U_40) aux bornes de l'actionneur et de la tension (U_test) aux bornes de la résistance de test, de manière à générer un courant de test (I_test) d'intensité inférieur à l'intensité d'activation (I_40) ;

iv) mesurer la tension (U_test) aux bornes de la résistance de test ;

v) à partir de la tension (U_test) mesurée aux bornes de la résistance de test et de la valeur déterminée (R_test) de la résistance de test (402), calculer avec la loi d'Ohm la valeur du courant de test (I_test) généré par l'application de la tension de fonctionnement (U),

vi) à partir de la tension de fonctionnement (U), de la tension (U_test) mesurée aux bornes de la résistance de test et de la valeur calculée du courant de test (I_test), calculer avec la loi d'Ohm la résistance interne effective (R_41) de l'actionneur électrique (40) ;

vii) comparer la résistance interne effective (R_41) calculée de l'actionneur électrique (40) avec des valeurs seuil minimales (R_40min) et maximales (R_40max) de résistance interne nominale de l'actionneur électrique stockée dans une mémoire de stockage (20) ;

viii) n'autoriser le décollage du drone que si la résistance interne effective (R_41) de l'actionneur électrique est comprise entre les valeurs seuil minimales (R_40min) et maximales (R_40max) de résistance interne nominale ;

le procédé comprenant, en outre, avant chaque décollage du drone, une étape de charge de la réserve d'énergie capacitive (410) par une source d'énergie (S), et après chaque atterrissage une étape de décharge de la réserve d'énergie capacitive (410) dans le circuit de décharge (420).

15. Procédé selon la revendication 14, dans lequel le drone comprend un dispositif de contrôle automatique selon la revendication 7, le procédé comprenant, en outre, avant chaque décollage du drone, une étape de vérification de continuité électrique entre le circuit électronique de déploiement (30) et le dispositif de contrôle automatique au travers du connecteur électromécanique (90), le drone étant interdit de décoller si aucune continuité électrique n'est détectée.

16. Procédé selon l'une quelconque des revendications 14 ou 15, dans lequel le drone comprend un dispositif de contrôle automatique selon la revendication 9, le procédé comprenant, en outre, avant chaque décollage du drone, une étape de comparaison des valeurs de température et/ou d'humidité mesurées au cours du temps avec des valeurs seuil minimales et maximales nominales de température et/ou d'humidité stockées en mémoire, le drone étant interdit de décoller si les valeurs de température et/ou d'humidité mesurées sont en dehors des valeurs seuil minimales et maximales nominales de température et/ou d'humidité stockées en mémoire.

17. Procédé selon l'une quelconque des revendications 14 à 16, dans lequel le drone comprend un dispositif de contrôle automatique selon la revendication 9, le procédé comprenant, en outre, avant chaque décollage du drone et pour chaque opération de maintenance, une étape de comparaison de chaque information temporelle d'historique d'opérations de maintenance avec le délai de maintenance, le drone étant interdit de décoller si, pour au moins une opération de maintenance déterminée, une information temporelle d'historique dépasse le délai de maintenance de ladite opération de maintenance déterminée.

## Patentansprüche

1. Vorrichtung zur automatischen Überprüfung (400) des Servicezustands eines Fallschirmsystems für eine Flugdrohne, die eine elektronische Flugschaltung (10) beinhaltet, wobei das Fallschirmsystem Folgendes beinhaltet:

   • einen Fallschirm (60);
   • einen Öffnungsmechanismus (50);
   • eine elektronische Öffnungsschaltung (30), die dazu bestimmt ist, mit der elektronischen Flugschaltung (10) verbunden zu sein und eine Betriebsspannung (U) zur Ansteuerung des Öffnungsmechanismus (50) des Fallschirms anzulegen; und
   • ein elektrisches Betätigungselement (40) für den Öffnungsmechanismus des Fallschirms, das mit der elektronischen Öffnungsschaltung (30) verbunden ist, wobei das elektrische Betätigungselement (40) einen Nenninnenwiderstand (R_40), einen effektiven Innenwiderstand (R_41) und einen Aktivierungsschwellenstrom (I_40) bei der Betriebsspannung (U) aufweist, wobei das Betätigungselement mit der elektrischen Masse (M) durch einen Betätigungselementschalter (42) verbunden ist, der durch die elektronische Öffnungsschaltung ansteuerbar ist, wobei die Überprüfungsvorrichtung (400) Folgendes beinhaltet:

      • einen resistiven Testzweig (401), der einen Testwiderstand (402) mit einem bestimmten Wert (R_test) beinhaltet, der mit einem Testschalter (403), der durch die elektronische Öffnungsschaltung (30) ansteuerbar ist, in Reihe geschaltet ist, wobei der Testzweig zwischen der elektrischen Masse (M) und einem ersten Verbindungsknoten (N1), der zwischen dem elektrischen Betätigungselement (40) für den Öffnungsmechanismus des Fallschirms und dem Betätigungselementschalter (42) eingerichtet ist, zu dem Betätigungselementschalter (42) parallel geschaltet ist, wobei der Wert (R_test) des Testwiderstands (402) so gewählt ist, dass er einen Teststrom (I_test) erzeugt, der kleiner als der Aktivierungsstrom (I_40) des elektrischen Betätigungselements (40) ist, wenn die Betriebsspannung (U) angelegt wird, und so, dass, wenn das Betätigungselement kurzgeschlossen ist, der induzierte Teststrom (I_test) kleiner als der Aktivierungsstrom (I_40) bleibt,
      • eine Schaltung zum Messen der Spannung (404) zwischen den Anschlüssen des Testwiderstands;
      • ein Mittel zum Berechnen eines effektiven Innenwiderstands des elektrischen Betätigungselements,
      • einen Speicher (20), der mindestens minimale (R_40min) und maximale (R_40max) Schwellenwerte eines Nenninnenwiderstands (R_40) des elektrischen Betätigungselements beinhaltet; und
      • ein Mittel zum Vergleichen des berechneten effektiven Innenwiderstands (R_41) des Betätigungselements mit den minimalen (R_40min) und maximalen (R_40max) Werten eines Nenninnenwiderstands (R_40) des elektrischen Betätigungselements (40), die in dem Speicher (20) gespeichert sind;

   und ferner beinhaltend:

      • eine kapazitive elektrische Energiereserve (410), die dazu bestimmt ist, zwischen einer Energiequelle (S) der Drohne und dem elektrischen Betätigungselement (40) eingerichtet zu sein, um durch die Energiequelle (S) der Drohne geladen zu werden und das Betätigungselement (40) bei Ansteuerung durch die elektronische Öffnungsschaltung (30) mit Strom zu versorgen,
      • eine Entladeschaltung (420) für die kapazitive elektrische Energiereserve (410), die zwischen der elektrischen Masse (M) und einem zweiten Verbindungsknoten (N2), der zwischen der kapazitiven elektrischen Energiereserve (410) und dem Betätigungselement (40) eingerichtet ist, parallel zu dem Betätigungselement (40) eingerichtet ist.

2. Automatische Überprüfungsvorrichtung nach Anspruch 1, wobei der Öffnungsmechanismus (50) eine pyrotechnische Ladung zum Ausstoßen des Fallschirms beinhaltet, die durch das elektrische Betätigungselement elektrisch auslösbar ist.

3. Automatische Überprüfungsvorrichtung nach Anspruch 1, wobei der Öffnungsmechanismus (50) eine Feder zum Ausstoßen des Fallschirms beinhaltet, die durch das elektrische Betätigungselement elektrisch freigesetzt werden kann, wobei die automatische Überprüfungsvorrichtung ferner einen Sensor für eine gespannte Position der Ausstoßfeder und ein Mittel zum Vergleichen der durch den Sensor gemessenen gespannten Position mit einer minimalen gespannten Nennschwellenposition, die in dem Speicher gespeichert ist, beinhaltet.

**4.** Automatische Überprüfungsvorrichtung nach Anspruch 1, wobei der Öffnungsmechanismus (50) eine Gasreserve zum Ausstoßen des Fallschirms beinhaltet, die durch das elektrische Betätigungselement elektrisch freigesetzt werden kann, wobei die automatische Überprüfungsvorrichtung ferner einen Sensor für einen Druck der Ausstoßgasreserve und ein Mittel zum Vergleichen des Drucks der Ausstoßgasreserve mit einem minimalen Nennschwellendruck, der in dem Speicher gespeichert ist, beinhaltet.

**5.** Automatische Überprüfungsvorrichtung nach einem der Ansprüche 1 bis 4, wobei der Betätigungselementschalter (42) und der Testschalter (403) elektronische Schalter sind.

**6.** Automatische Überprüfungsvorrichtung nach Anspruch 5, wobei die Schalter Transistoren vom Typ MOSFET sind.

**7.** Automatische Überprüfungsvorrichtung nach einem der Ansprüche 1 bis 6, ferner beinhaltend einen elektromechanischen Verbinder (90) zu der elektronischen Öffnungsschaltung, wobei der elektromechanische Verbinder (90) einen Kontakt beinhaltet, der eine elektrische Schaltung nur dann schließt, wenn der elektromechanische Verbinder (90) korrekt angeschlossen ist.

**8.** Automatische Überprüfungsvorrichtung nach einem der Ansprüche 1 bis 7, ferner beinhaltend einen Temperatur- und/oder Feuchtigkeitssensor, der so nahe wie möglich an dem Fallschirm platziert ist, und wobei der Speicher minimale und maximale Nenntemperatur- und/oder -feuchtigkeitsschwellenwerte sowie im Laufe der Zeit gemessene Temperatur- und/oder Feuchtigkeitswerte beinhaltet.

**9.** Automatische Überprüfungsvorrichtung nach einem der Ansprüche 1 bis 8, wobei der Speicher (20) zeitliche Verlaufsinformationen über mindestens einen Vorgang einer Wartung sowie mindestens eine Wartungsfrist, die einer maximal zulässigen Dauer zwischen zwei Vorgängen einer bestimmten Wartung entspricht, enthält.

**10.** Autonome Flugdrohne, beinhaltend eine elektronische Flugschaltung (10) und ein Fallschirmsystem, das Folgendes beinhaltet:

- einen Fallschirm (60);
- einen Öffnungsmechanismus (50);
- eine elektronische Öffnungsschaltung (30), die dazu bestimmt ist, mit der elektronischen Flugschaltung (10) verbunden zu sein und eine Betriebsspannung (U) zur Ansteuerung des Öffnungsmechanismus des Fallschirms anzulegen; und
- ein elektrisches Betätigungselement (40) für den Öffnungsmechanismus des Fallschirms, das mit der elektronischen Öffnungsschaltung verbunden ist, wobei das Betätigungselement einen Nenninnenwiderstand (R_40), einen effektiven Innenwiderstand (R_41) und einen Aktivierungsschwellenstrom (I_40) bei der Betriebsspannung (U) aufweist, wobei das Betätigungselement mit der elektrischen Masse (M) durch einen Betätigungselementschalter verbunden ist, der durch die elektronische Öffnungsschaltung ansteuerbar ist, **dadurch gekennzeichnet, dass** es eine automatische Überprüfungsvorrichtung (400) für den Betriebszustand des Fallschirmsystems nach einem der Ansprüche 1 bis 9 beinhaltet.

**11.** Leiterplatte zur Betätigung der Öffnung eines Fallschirms, der über einen Öffnungsmechanismus verfügt, für eine Flugdrohne, wobei die Leiterplatte einen elektrischen Verbinder, der dazu bestimmt ist, mit dem Öffnungsmechanismus (50) verbunden zu sein, einen elektrischen Verbinder, der dazu bestimmt ist, mit einer elektronischen Öffnungsschaltung (30) der Flugdrohne verbunden zu sein, die dazu fähig ist, eine Betriebsspannung (U) zur Ansteuerung des Öffnungsmechanismus (30) des Fallschirms (60) anzulegen, und ein elektrisches Betätigungselement (40) für den Öffnungsmechanismus (50), das einen Nenninnenwiderstand (R_40), einen effektiven Innenwiderstand (R_41) und einen Aktivierungsschwellenstrom (I_40) bei der Betriebsspannung aufweist, beinhaltet, wobei das elektrische Betätigungselement mit der Masse (M) durch einen Betätigungselementschalter (42) verbunden ist, der durch die elektronische Öffnungsschaltung ansteuerbar ist, wobei die Leiterplatte **dadurch gekennzeichnet ist, dass** sie eine automatische Überprüfungsvorrichtung für den Servicezustand eines Fallschirmsystems nach einem der Ansprüche 1 bis 9 beinhaltet.

**12.** Fallschirm-Kit, das einen Fallschirm (60) beinhaltet, der über einen Öffnungsmechanismus für den Fallschirm (50) verfügt, **dadurch gekennzeichnet, dass** es eine Leiterplatte nach Anspruch 11 beinhaltet.

**13.** Fallschirm-Kit nach Anspruch 12, ferner beinhaltend eine elektronische Öffnungsschaltung (30) für den Fallschirm, die mit dem elektrischen Betätigungselement für den Öffnungsmechanismus des Fallschirms verbunden ist, und beinhaltend einen elektromechanischen Verbinder (90), der dazu bestimmt ist, mit einer elektronischen Flugschaltung (10) einer Flugdrohne verbunden zu sein.

14. Verfahren zur automatischen Überprüfung des Servicezustands eines Fallschirmsystems für eine Flugdrohne, die eine elektronische Flugschaltung (10) beinhaltet, wobei das Fallschirmsystem Folgendes beinhaltet:

- einen Fallschirm (60);
- eine elektronische Öffnungsschaltung (30) für den Fallschirm, die dazu bestimmt ist, mit der elektronischen Flugschaltung verbunden zu sein, und
- ein elektrisches Betätigungselement (40) für einen Öffnungsmechanismus des Fallschirms (50), das einen Nenninnenwiderstand (R_40), einen effektiven Innenwiderstand (R_41) und einen Aktivierungsschwellenstrom (I_40) bei der Betriebsspannung aufweist, wobei das Betätigungselement mit der Masse (M) durch einen Betätigungselementschalter (42) verbunden ist, der durch die elektronische Öffnungsschaltung ansteuerbar ist, wobei die Drohne eine automatische Überprüfungsvorrichtung nach Anspruch 1 beinhaltet; wobei das Überprüfungsverfahren die folgenden Schritte beinhaltet:

i) Anschließen eines resistiven Testzweigs (401), der einen Testwiderstand (402) mit einem bestimmten Wert (R_test) beinhaltet, der mit einem Testschalter (403), der durch die elektronische Öffnungsschaltung (30) ansteuerbar ist, in Reihe geschaltet ist, wobei der Testzweig zwischen der elektrischen Masse (M) und einem ersten Verbindungsknoten (N1), der zwischen dem elektrischen Betätigungselement (40) des Öffnungsmechanismus des Fallschirms und dem Betätigungselementschalter (42) eingerichtet ist, zu dem Betätigungselementschalter (42) parallel geschaltet ist;
ii) Öffnen des Betätigungselementschalters (42) und Schließen des Testschalters (403);
iii) Anlegen einer Betriebsspannung (U) zwischen einem Anschluss des Betätigungselements und der Masse, wobei die Betriebsspannung gleich der Summe aus der Spannung (U_40) an den Anschlüssen des Betätigungselements und der Spannung (U_test) an den Anschlüssen des Testwiderstands ist, um einen Teststrom (I_test) mit einer Stärke kleiner als die Aktivierungsstärke (I_40) zu erzeugen;
iv) Messen der Spannung (U_test) an den Anschlüssen des Testwiderstands;
v) anhand der an den Anschlüssen des Testwiderstands gemessenen Spannung (U_test) und des bestimmten Werts (R_test) des Testwiderstands (402), Berechnen, mit dem Ohmschen Gesetz, des Werts des Teststroms (I_test), der durch das Anlegen der Betriebsspannung (U) erzeugt wird,
vi) anhand der Betriebsspannung (U), der an den Anschlüssen des Testwiderstands gemessenen Spannung (U_test) und des berechneten Werts des Teststroms (I_test), Berechnen, mit dem Ohmschen Gesetz, des effektiven Innenwiderstands (R_41) des elektrischen Betätigungselements (40);
vii) Vergleichen des berechneten effektiven Innenwiderstands (R_41) des elektrischen Betätigungselements (40) mit minimalen (R_40min) und maximalen (R_40max) Schwellenwerten eines Nenninnenwiderstands des elektrischen Betätigungselements, die in einem Speicher (20) gespeichert sind;
viii) Gestatten des Abhebens der Drohne nur dann, wenn der effektive Innenwiderstand (R_41) des elektrischen Betätigungselements zwischen den minimalen (R_40min) und maximalen (R_40max) Schwellenwerten eines Nenninnenwiderstands liegt;

wobei das Verfahren ferner vor jedem Abheben der Drohne einen Schritt des Ladens der kapazitiven Energiereserve (410) durch eine Energiequelle (S) und nach jedem Landen einen Schritt des Entladens der kapazitiven Energiereserve (410) in die Entladeschaltung (420) beinhaltet.

15. Verfahren nach Anspruch 14, wobei die Drohne eine automatische Überprüfungsvorrichtung nach Anspruch 7 beinhaltet, wobei das Verfahren ferner vor jedem Abheben der Drohne einen Schritt des Verifizierens einer elektrischen Kontinuität zwischen der elektronischen Öffnungsschaltung (30) und der automatischen Überprüfungsvorrichtung durch den elektromechanischen Verbinder (90) beinhaltet, wobei der Drohne das Abheben untersagt wird, wenn keine elektrische Kontinuität detektiert wird.

16. Verfahren nach einem der Ansprüche 14 oder 15, wobei die Drohne eine automatische Überprüfungsvorrichtung nach Anspruch 9 beinhaltet, wobei das Verfahren ferner vor jedem Abheben der Drohne einen Schritt des Vergleichens der im Laufe der Zeit gemessenen Temperatur- und/oder Feuchtigkeitswerte mit minimalen und maximalen Nenntemperatur- und/oder -feuchtigkeitsschwellenwerten, die im Speicher gespeichert sind, beinhaltet, wobei der Drohne das Abheben untersagt wird, wenn die gemessenen Temperatur- und/oder Feuchtigkeitswerte außerhalb der im Speicher gespeicherten minimalen und maximalen Nenntemperatur- und/oder -feuchtigkeitsschwellenwerte liegen.

17. Verfahren nach einem der Ansprüche 14 bis 16, wobei die Drohne eine automatische Überprüfungsvorrichtung nach Anspruch 9 beinhaltet, wobei das Verfahren ferner vor jedem Abheben der Drohne und für jeden Wartungsvorgang einen Schritt des Vergleichens jeder zeitlichen Verlaufsinformation über Wartungsvorgänge mit der Wartungsfrist beinhaltet, wobei der Drohne das Abheben untersagt wird, wenn für mindestens einen bestimmten Wartungsvorgang eine zeitliche Verlaufsinformation die Wartungsfrist für den bestimmten Wartungsvorgang überschreitet.

## Claims

1. Device (400) for automatically checking the service state of a parachute system for a flying drone which comprises an electronic flight circuit (10), the parachute system comprising:

    • a parachute (60);
    • a deployment mechanism (50);
    • an electronic deployment circuit (30) intended to be connected to the electronic flight circuit (10) and to apply an operating voltage (U) for controlling the deployment mechanism (50) of the parachute; and
    • an electric actuator (40) of the deployment mechanism of the parachute connected to the electronic deployment circuit (30), the electric actuator (40) having a nominal internal resistance (R_40), an effective internal resistance (R_41) and an activation threshold current (I_40) at the operating voltage (U), the actuator being connected to electrical earth (M) by an actuator switch (42) controllable by the electronic deployment circuit, the checking device (400) comprising:

        • a resistive test branch (401) comprising a test resistor (402) of a determined value (R_test) connected in series with a test switch (403) controllable by the electronic deployment circuit (30), the test branch being connected in parallel with the actuator switch (42), between electrical earth (M) and a first connection node (N1) arranged between the electric actuator (40) of the deployment mechanism of the parachute and the actuator switch (42), the value (R_test) of the test resistor (402) being chosen so as to generate a test current (I_test) lower than the activation current (I_40) of the electric actuator (40) when the operating voltage (U) is applied and so that, if the actuator is short-circuited, the induced test current (I_test) remains lower than the activation current (I_40);
        • a voltage measuring circuit (404) between the terminals of the test resistor;
        • a means of calculating an effective internal resistance of the electric actuator;
        • a storage memory (20) comprising at least minimum (R_40min) and maximum (R_40max) threshold values for the nominal internal resistance (R_40) of the electric actuator; and
        • a means of comparing the calculated effective internal resistance (R_41) of the actuator with the minimum (R_40min) and maximum (R _40max) values for the nominal internal resistance (R_40) of the electric actuator (40) which are stored in the storage memory (20);

    and further comprising:

        • a capacitive electrical energy reserve (410) intended to be arranged between an energy source (S) of the drone and the electric actuator (40) so as to be charged by the energy source (S) of the drone and supply power to the actuator (40) on command of the electronic deployment circuit (30),
        • a discharge circuit (420) of the capacitive electrical energy reserve (410) arranged in parallel with the actuator (40), between electrical earth (M) and a second connection node (N2) arranged between the capacitive electrical energy reserve (410) and the actuator (40).

2. Automatic checking device according to Claim 1, wherein the deployment mechanism (50) comprises a pyrotechnic charge for ejecting the parachute and which is electrically triggerable by the electric actuator.

3. Automatic checking device according to Claim 1, wherein the deployment mechanism (50) comprises a spring for ejecting the parachute and which is electrically releasable by the electric actuator, the automatic checking device further comprising a sensor for sensing the stress position of the ejection spring and a means of comparing the stress position measured by the sensor with a minimum nominal threshold stress position stored in the storage memory.

4. Automatic checking device according to Claim 1, wherein the deployment mechanism (50) comprises a reserve of ejection gas for the parachute and which is electrically releasable by the electric actuator, the automatic checking device further comprising a sensor for sensing the pressure of the reserve of ejection gas and a means of comparing the pressure of the reserve of ejection gas with a minimum nominal threshold pressure stored in the storage memory.

5. Automatic checking device according to any one of Claims 1 to 4, wherein the actuator switch (42) and the test switch (403) are electronic switches.

6. Automatic checking device according to Claim 5, wherein the switches are MOSFET transistors.

7. Automatic checking device according to any one of Claims 1 to 6, further comprising an electromechanical connector (90) to the electronic deployment circuit, the electromechanical connector (90) comprising a contact which closes an electrical circuit only when the electromechanical connector (90) is correctly connected.

8. Automatic checking device according to any one of Claims 1 to 7, further comprising a temperature and/or humidity sensor placed as close as possible to the parachute, and wherein the storage memory comprises minimum and maximum threshold values for nominal temperature and/or humidity as well as temperature and/or humidity values measured over time.

9. Automatic checking device according to any one of Claims 1 to 8, wherein the storage memory (20) contains historical time information relating to at least one operation of a maintenance procedure as well as at least one maintenance time corresponding to a maximum permitted duration between two operations of a determined maintenance procedure.

10. Autonomous flying drone comprising an electronic flight circuit (10) and a parachute system comprising:

   • a parachute (60);
   • a deployment mechanism (50);
   • an electronic deployment circuit (30) intended to be connected to the electronic flight circuit (10) and to apply an operating voltage (U) for controlling the deployment mechanism of the parachute; and
   • an electric actuator (40) of the deployment mechanism of the parachute connected to the electronic deployment circuit, the actuator having a nominal internal resistance ($R\_40$), an effective internal resistance ($R\_41$) and an activation threshold current ($I\_40$) at the operating voltage (U), the actuator being connected to electrical earth (M) by an actuator switch controllable by the electronic deployment circuit, **characterized in that** it comprises a device (400) for automatically checking the service state of the parachute system according to any one of Claims 1 to 9.

11. Electronic card for actuating the deployment of a parachute provided with a deployment mechanism for a flying drone, the electronic card comprising an electrical connector intended to be connected to the deployment mechanism (50), an electrical connector intended to be connected to an electronic deployment circuit (30) of the flying drone capable of applying an operating voltage (U) for controlling the deployment mechanism (30) of the parachute (60), and an electric actuator (40) of the deployment mechanism (50) having a nominal internal resistance ($R\_40$), an effective internal resistance ($R\_41$) and an activation threshold current ($I\_40$) at the operating voltage, the electric actuator being connected to earth (M) by an actuator switch (42) controllable by the electronic deployment circuit, the electronic card being **characterized in that** it comprises a device for automatically checking the service state of a parachute system according to any one of Claims 1 to 9.

12. Parachute kit comprising a parachute (60) provided with a deployment mechanism of the parachute (50), **characterized in that** it comprises an electronic card according to Claim 11.

13. Parachute kit according to Claim 12, further comprising an electronic deployment circuit (30) of the parachute connected to the electric actuator of the deployment mechanism of the parachute, and comprising an electromechanical connector (90) intended to be connected to an electronic flight circuit (10) of a flying drone.

14. Method for automatically checking the service state of a parachute system for a flying drone which comprises an electronic flight circuit (10), the parachute system comprising:

   • a parachute (60);
   • an electronic deployment circuit (30) of the parachute intended to be connected to the electronic flight circuit and
   • an electric actuator (40) of a deployment mechanism of the parachute (50) having a nominal internal resistance ($R\_40$), an effective internal resistance ($R\_41$) and an activation threshold current ($I\_40$) at the operating voltage, the electric actuator being connected to earth (M) by an actuator switch (42) controllable by the electronic deployment circuit, the drone comprising an automatic checking device according to Claim 1; the checking method comprising the following steps:

i) connecting a resistive test branch (401) comprising a test resistor (402) of a determined value (R_test) connected in series with a test switch (403) controllable by the electronic deployment circuit (30), the test branch being connected in parallel with the actuator switch (42), between electrical earth (M) and a first connection node (N1) arranged between the electric actuator (40) of the deployment mechanism of the parachute and the actuator switch (42);

ii) opening the actuator switch (42) and closing the test switch (403);

iii) applying an operating voltage (U) between a terminal of the actuator and earth, the operating voltage being equal to the sum of the voltage (U_40) across the terminals of the actuator and the voltage (U_test) across the terminals of the test resistor, so as to generate a test current (I_test) having an intensity of less than the activation intensity (I_40);

iv) measuring the voltage (U_test) across the terminals of the test resistor;

v) calculating, on the basis of the voltage (U_test) measured across the terminals of the test resistor and the determined value (R_test) of the test resistor (402), the value of the test current (I_test) generated by the application of the operating voltage (U) using Ohm's law,

vi) calculating, on the basis of the operating voltage (U), the voltage (U_test) measured across the terminals of the test resistor and the calculated value of the test current (I_test), the effective internal resistance (R_41) of the electric actuator (40) using Ohm's law;

vii) comparing the calculated effective internal resistance (R_41) of the electric actuator (40) with minimum (R_40min) and maximum (R_40max) threshold values for the nominal internal resistance of the electric actuator stored in a storage memory (20);

viii) permitting the drone to take off only if the effective internal resistance (R_41) of the electric actuator is between the minimum (R_40min) and maximum (R_40max) threshold values for nominal internal resistance;

the method further comprising, before each take-off of the drone, a step of charging the capacitive energy reserve (410) by an energy source (S), and, after each landing, a step of discharging the capacitive energy reserve (410) into the discharge circuit (420).

15. Method according to Claim 14, wherein the drone comprises an automatic checking device according to Claim 7, the method further comprising, before each take-off of the drone, a step of verifying electrical continuity between the electronic deployment circuit (30) and the automatic checking device through the electromechanical connector (90), the drone being prohibited from taking off if no electrical continuity is detected.

16. Method according to either one of Claims 14 and 15, wherein the drone comprises an automatic checking device according to Claim 9, the method further comprising, before each take-off of the drone, a step of comparing the temperature and/or humidity values measured over time with minimum and maximum nominal threshold values for temperature and/or humidity which are stored in memory, the drone being prohibited from taking off if the measured temperature and/or humidity values are outside the minimum and maximum nominal threshold values for temperature and/or humidity which are stored in memory.

17. Method according to any one of Claims 14 to 16, wherein the drone comprises an automatic checking device according to Claim 9, the method further comprising, before each take-off of the drone and for each maintenance operation, a step of comparing each piece of historical time information relating to maintenance operations with the maintenance time, the drone being prohibited from taking off if, for at least one determined maintenance operation, a piece of historical time information exceeds the maintenance time of said determined maintenance operation.

[Fig. 1]

[Fig. 2]

[Fig. 3]

[Fig. 4]

[Fig. 5]

[Fig. 6]

EP 4 081 455 B1

## RÉFÉRENCES CITÉES DANS LA DESCRIPTION

**Documents brevets cités dans la description**

- WO 20191819989 A
- CN 208775024